# EUROPÄISCHE PATENTSCHRIFT

(11) **EP 2 225 617 B1**
(45) Veröffentlichungstag und Bekanntmachung des Hinweises auf die Patenterteilung: **13.11.2013**
(21) Anmeldenummer: 08853948.1
(22) Anmeldetag: 21.11.2008
(51) Int. Cl.: G05B 17/02, G05B 23/02, G06F 17/50

(54) **SYSTEM UND VERFAHREN ZUR KOMBINIERTEN INFORMATIONSERFASSUNG FÜR SCADA- UND SIMULATIONS- ODER NETZBERECHNUNGSANWENDUNGEN**
SYSTEM AND METHOD FOR THE COMBINED ACQUISITION OF DATA FOR SCADA AND SIMULATION OR NETWORK CALCULATION APPLICATIONS
SYSTÈME ET PROCÉDÉ D'ACQUISITION D'INFORMATIONS COMBINÉ POUR APPLICATIONS DE SCADA ET DE SIMULATION OU D'ESTIMATION DE RÉSEAUX

(30) Priorität: 29.11.2007 DE 102007057871
(43) Veröffentlichungstag der Anmeldung: 08.09.2010
(73) Patentinhaber: ABB AG, 68309 Mannheim (DE)
(72) Erfinder: ENGEL, Bardolf, 67136 Fußgönheim (DE)
(86) Internationale Anmeldenummer: PCT/EP2008/009902
(87) Internationale Veröffentlichungsnummer: WO 2009/068228

(56) Entgegenhaltungen:
- US-A1- 2002 116 374
- US-A1- 2003 236 576
- US-A1- 2007 165 031

## Beschreibung

Die Erfindung betrifft ein System sowie ein Verfahren zur kombinierten Informationserfassung für SCADA- und Netzberechnungsanwendungen oder Simulationsanwendungen, insbesondere für Gas-, Wasser- oder Fernwärmeversorgungsnetze.

In Netzführungssystemen, insbesondere für Gasnetze, werden zur Überwachung, Steuerung und Informations- oder Datenerfassung (ÜSE), auch als Supervisory, Control and Data Acquisition (SCADA) bezeichnet, detaillierte Modelle des jeweiligen Netzes sowie speziell der Geräte in den verschiedenen Stationen verwendet. Die jeweilig eingesetzten Simulations- und/oder Netzberechnungsprogramme hingegen nutzen demgegenüber vereinfachte Modelle, bei welchen beispielsweise mehrerer physikalische Geräte zu sog. logischen Geräten zusammengefasst werden. Um eine Übergabe der online-Daten vom SCADA-System an die jeweilige Simulations- und/oder Netzberechnungsanwendung durchführen zu können, müssen im SCADA-System zunächst diese logischen, virtuellen Geräte generiert (berechnet) werden. Ebenso ist unter Umständen eine Aufteilung der erzielten Ergebnisse auf mehrere reale Messstellen zur Anzeige nötig. Alle diese Modelle, das heißt sowohl detailliertes als auch vereinfachtes Modell, sowie die zu dessen Erzeugung erforderlichen Anweisungen und Rechenregeln in SCADA, sind durch individuelle Dateneingabe und Parametrierung zu erfassen.

Herkömmlich werden demgemäß die zu Grunde liegenden Modelle beziehungsweise die das Netzwerk in der jeweiligen Anwendung beschreibenden oder abbildenden Modelle und/oder die entsprechend zu verknüpfenden Objekte, insbesondere Feldgeräte, Aktoren beziehungsweise Stellglieder, wie beispielsweise Antriebe, Pumpen oder auch Ventile, Sensoren beziehungsweise Geber, Schaltgeräte, Speicherprogrammierbare Steuerungen (SPS) sowie dergleichen mehr, einzeln und voneinander unabhängig erfasst. Dies bedingt einen vergleichsweise hohen Aufwand und birgt das Risiko, dass bei entsprechender Ersterfassung beziehungsweise Neuerfassung und/oder Änderung wenigstens eines der beiden Modelle, oder auch Teilbereiche davon, Inkonsistenzen des Informations- oder Datenbestandes beider Modelle beziehungsweise Model/ebenen durch unterschiedliche Eingaben/Erfassungen auftreten können. Inkonsistenten, das heißt, nicht alle benötigten Detailinformationen werden in im übergeordneten Modell erfasst oder aber sich widersprechende beziehungsweise entgegenstehende Informationen werden erfasst. Diese können im Online-Betrieb zu Ergebnisverfälschungen oder Fehlergebnissen führen und/oder Fehlfunktionen auslösen.

Aus der US 2007/0165031 A1 ist diesbezüglich ein graphisches Anzeigesystem für eine Prozessumgebung bekannt geworden, mit welchem Prozessinformationen wie beispielsweise Zustandsinformationen einzelner Geräte und Einrichtungen der jeweiligen prozess- oder verfahrenstechnischen Anlage mehreren Nutzern angezeigt werden können. Die Visualisierung umfasst dabei neben einer graphischen Darstellung einzelner Elemente der Prozessumgebung auch deren Eigenschaften sowie eine Routine, mit welcher bei Änderungen im Prozess eine Anpassung der jeweiligen Darstellung oder bei manueller Anpassung der Darstellung eine entsprechende Anpassung der Prozessumgebung bewirkbar ist.

Der Erfindung liegt die Aufgabe zu Grunde eine verbesserte sowie effizientere Informationserfassung, insbesondere im Hinblick auf eine verbesserte Konsistenz der erfassten Informationen, von SCADA-. und Simulations- oder Netzberechnungsanwendungen zu ermöglichen.

Diese Aufgabe wird durch ein System zur kombinierten Informationserfassung mit den Merkmalen des Anspruchs 1 gelöst. Vorteilhafte Ausgestaltungen und Weiterentwicklungen sowie ein entsprechendes Verfahren, insbesondere zur Ausführung auf vorgenanntem System, sind in weiteren Ansprüchen und der nachfolgenden Beschreibung angegeben.

Das erfindungsgemäße System zur kombinierten Informationserfassung für SCADA-. und Simulations- oder Netzberechnungsanwendungen umfasst zumindest eine Datenverarbeitungseinrichtung welche Mittel zur Vorlagengenerierung sowie zur Informationserfassung aufweist, mit welchen im Zusammenwirken mit wenigstens einem Datenspeicher wenigstens zwei Modellebenen eines Versorgungsnetzes, insbesondere eines Gas-, Wasser- oder Femwärmenetzes, vorlagen- und musterbasiert generierbar sind, wobei mittels Vorlagenerzeugung für sich wiederholende Teilbereiche oder Objektgruppen und Objekte der wenigstens zwei Modellebenen jeweils zumindest eine konsistente generische Vorlage erstellbar und aufrufbar ist, welche ein einheitliches, konsistentes Muster für ein Detailmodell wenigstens einer ersten Modellebene, für ein vereinfachtes beziehungsweise zusammengefasstes Modell wenigstens einer zweiten Modellebene und jeweilige Konvertierungsangaben, insbesondere für den Übergang zwischen je wenigstens zwei Modellebenen, umfasst, und die jeweilige generische Vorlage vervielfältigbar, insbesondere duplizierbar ist, und wobei mittels Informationserfassung die jeweilige generische Vorlage individuell anpassbar ist und konkrete Teilbereiche beider Modellebenen kombiniert ausbildbar sind.

In vorteilhafter Weiterbildung umfassen die Konvertierungsangaben dabei Umrechnungsparameter und/oder Berechnung- und/oder Übergangsregeln und/oder Konvertierungsanweisungen und/oder Verknüpfungsvorschriften und/oder Abhängigkeiten und/oder topologische Zusammenhänge und/oder Plausibilitätsregeln- Dabei können vorgenannte Konvertierungsangaben insbesondere mathematische Operatoren und Funktionen, welche Addition, Subtraktion, Division Summenbildung, gewichtete Summe, Wichtungen und/oder Mittelwertbildung, aber auch logische Opratoren, insbesondere der booleschen Algebra in der Form UND, ODER, NICHT, umfassen beziehungsweise beinhalten.

Auch komplexere Verknüpfungen sind dabei umsetzbar, beispielsweise der Form: Wenn Ventil1 in Leitung 1 im Zustand offen und Ventil 2 Leitung 2 im Zustand offen, wobei es sich bei Leitung 1 sowie Leitung 2 um parallel geführte Zweige handelt, dann bestimme die mittlere Temperatur aus beiden Leitungen. Wenn jedoch Venti1 in Leitung 1 im Zustand offen und Ventil 2 Leitung 2 im Zustand geschlossen dann bestimme die mittlere Temperatur lediglich anhand der Temperatur aus Leitung 1.

Vorgenanntes vereinfachtes Beispiel ist auch für andere, insbesondere messbare, physikalischen Größen wie beispielsweise Durchflussmenge, Druck und dergleichen mehr sowie auch für mehr als zwei Leitungen durchführbar.

In einer weiteren Ausgestaltung ist vorgesehen, dass die generischen und/oder angepassten Vorlagen und/oder zugehörigen Muster und/oder konkretisierten Teilbereiche oder Objekte auf einem dafür eingerichteten Datenspeicher, insbesondere in wenigstens einer entsprechend konfigurierten Datenbank zugreif- und abrufbar speicherbar sind.

In einer weiteren Ausgestaltung umfasst die jeweilige generische Vorlage sowie deren zugehöriges Muster wenigstens eine Maske zur manuellen Erfassung und/oder Anpassung von Informationen beziehungsweise Daten.

Die jeweiligen Informationen sind dabei manuell erfassbar und/oder über wenigstens eine Kommunikationsverbindung automatisiert online erfassbar, beispielsweise im Zugriff auf ein entsprechendes Leitsystem sowie Geräteinformationen, insbesondere Sensor- und Zustandsinformationen.

In vorteilhafter Ausgestaltung ist wenigstens ein Prüfmittel vorgesehen, welches regelbasiert, insbesondere anhand von Plausibilitätsregeln im Zugriff auf Konvertierungsangaben, eine Plausibilitätsprüfung der jeweiligen Vorlage und zugehörigen Muster und/oder der konkreten Teilbereiche der ersten und/oder zweiten Modellebene bewirkt.

Eine Plausibilitätskontrolle, welche auch als Plausibilitätsprüfung oder Plausibilisierung bezeichnet wird, ermöglicht es einen Wert oder allgemein ein Ergebnis überschlagsmäßig daraufhin zu überprüfen, ob es plausibel erscheint, das heißt, ob es annehmbar, einleuchtend und nachvollziehbar ist.

So sind beispielsweise untere Schwellen- oder -mittelwerte für wenigstens eine Kenngröße beziehungsweise physikalische Größe der einzelnen Leitungszweige der ersten Modellebene vorgebbar, welche bei Bestimmung einer mittleren Kenngrößenwertes im zusammengefassten Modell der zweiten Modellebene nicht unterschritten werden dürfen. Als Kenngröße ist dabei die Temperatur, Durchflussmenge, Druck und dergleichen mehr einsetzbar.

Vorteilhaft ist dabei insbesondere bei Änderungen im Detailbereich überprüfbar, ob die jeweilige Änderung Auswirkungen auf die Gesamtmodellierung haben kann.

Beispielsweise kann auf diese Weise überprüft werden, ob ein logisches, virtuelles Ventil im vereinfachten Modell auch alle Einzelventile bestimmter Typen im Detailmodell beziehungsweise in der Detailmodellierung umfasst.

Entsprechendes gilt selbstverständlich auch für andere Objekte und/oder Objektgruppen.

In vorteilhafter Ausgestaltung ist wenigstens ein Hinweisgeber vorsehbar, welcher bei negativ verlaufender Plausibilitätsprüfung auf mögliche Inkonsistenten und/oder Fehlerfassungen und/oder Fehlangaben hinweist, insbesondere durch Generieren einer entsprechenden Meldung, beispielsweise mittels Dialogabfrage, gegebenenfalls auch mit Quittierfunktion, und/oder durch temporäres Sperren der jeweiligen Vorlage und/oder der zugehörigen Muster ein Verlassen und/oder Abspeichern der jeweiligen Vorlage und/oder Muster zunächst verhindert und insbesondere erst nach ausdrückücher Bestätigung beziehungsweise Quittierung zulässt.

Auch ist vorteilhaft vorsehbar, dass im Zugriff auf und unter Ausnutzung topologischer Zusammenhänge und/oder von Plausibilitätsregeln eine automatische Generierung des zusammengefassten Modells der zweiten Modellebene bewirkt wird, wobei bei unvollständigen Angaben zur Vervollständigung der Informationen aufgefordert wird.

Darüber hinaus wird die gestellte Aufgabe noch durch ein entsprechendes Verfahren zur kombinierten Informationserfassung für SCADA-. und Simulations- oder Netzberechnungsanwendungen, insbesondere zur Ausführung auf vorgenanntem System, gelöst, wobei schrittweise wenigstens zwei Modellebenen eines Versorgungsnetzes, insbesondere eines Gas-, Wasser- oder Fernwärmenetzes, vorlagen- und musterbasiert generiert werden, indem für sich wiederholende Teilbereiche oder Objektgruppen und Objekte der wenigstens zwei Modellebenen jeweils zumindest eine konsistente generische Vorlage erstellt wird, welche ein einheitliches, konsistentes Muster für ein Detailmodell wenigstens einer ersten Modellebene, für ein vereinfachtes beziehungsweise zusammengefasstes Modell wenigstens einer zweiten Modellebene und jeweilige Konvertierungsangaben, insbesondere für den Übergang zwischen je wenigstens zwei Modellebenen, umfasst, und die jeweilige generische Vorlage vervielfältigt, insbesondere duplizierfi wird und individuell angepasst wird und konkrete Teilbereiche beider Modellebenen kombiniert ausgebildet werden.

In vorteilhafter Weiterbildung werden als Konvertierungsangaben Umrechnungsparameter und/oder Berechnungs- und/oder Obergangsregein und/oder Konvertierungsanweisungen und/oder Verknüpfungsvorschriften und/oder Abhängigkeiten und/oder topologische Zusammenhänge und/oder Plausibilitätsregeln verwendet. Dabei können vorgenannte Konvertierungsangaben insbesondere mathematische Operatoren und Funktionen, welche Addition, Subtraktion, Division Summenbildung, gewichtete Summe, Wichtungen und/oder Mittelwertbildung, aber auch logische Opratoren, insbesondere der booleschen Algebra in der Form UND, ODER, NICHT, umfassen beziehungsweise beinhalten.

Auch komplexere Verknüpfungen sind dabei, entsprechend dem vorgenannten System, und insbesondere bezüglich zahlreicher auch unterschiedlicher physikalischer Messgrößen, vorteilhaft umsetzbar und nutzbar.

Weiterhin ist vorsehbar, dass die generischen und/oder angepassten Vorlagen und/oder zugehörigen Muster und/oder konkretisierten Teilbereiche auf einem dafür eingerichteten Datenspeicher, insbesondere in wenigstens einer entsprechend konfigurierten Datenbank zugreif und abrufbar gespeichert werden.

In Fortbildung des Verfahrens wird durch die jeweilige generische Vorlage sowie deren zugehöriges Muster wenigstens eine Maske zur manuellen Erfassung und/oder Anpassung von Informationen beziehungsweise Daten bereitgestellt.

Die jeweiligen Informationen sind dabei manuell und/oder über wenigstens eine Kommunikationsverbindung automatisiert online erfassbar, beispielsweise im Zugriff auf ein entsprechendes Leitsystem sowie Geräte- beziehungsweise Betriebsmittelinformationen, insbesondere Sensor- und Zustandsinformationen.

In vorteilhafter Ausprägung wird regelbasiert, insbesondere anhand von Plausibilitätsregeln im Zugriff auf Konvertierungsangaben, eine Plausibilitätsprüfung der jeweiligen Vorlage sowie der zugehörigen Muster und/oder der konkreten Teilbereiche durchgeführt , wobei insbesondere bei Änderungen im Detailbereich vorteilhaft überprüfbar ist, ob die jeweilige Änderung Auswirkungen auf die Gesamtmodellierung haben kann, so dass beispielhaft überprüfbar ist, ob ein logisches, virtuelles Objekt oder eine Objektgruppe im vereinfachten Modell auch alle zugehörigen Einzel-Objekte im Detailmodell beziehungsweise in der Detailmodellierung umfasst.

Auch sind in einer weiteren Ausführungsform beispielsweise untere Schwellen- oder -mittelwerte für wenigstens eine Kenngröße beziehungsweise physikalische Größe der einzelnen Leitungszweige der ersten Modellebene vorgebbar, welche bei Bestimmung einer mittleren Kenngrößenwertes im zusammengefassten Modell der zweiten Modellebene nicht unterschritten werden dürfen. Als Kenngröße ist dabei insbesondere die Temperatur, Durchflussmenge, Druck und dergleichen mehr einsetzbar.

Verfahrensgemäß ist weiterhin vorsehbar, dass bei negativ verlaufender Plausibilitätsprüfung auf mögliche Inkonsistenten und/oder Fehlerfassungen und/oder Fehlangaben hingewiesen und/oder aufmerksam gemacht wird, insbesondere durch Generieren einer entsprechenden Meldung, beispielsweise mittels Dialogabfrage, gegebenenfalls auch mit Quittierfunktion, und/oder durch temporäres Sperren der jeweiligen Vorlage und/oder der zugehörigen Muster, so dass ein Verlassen und/oder Abspeichern der jeweiligen Vorlage und/oder Muster zunächst verhindert und insbesondere erst nach ausdrücklicher Bestätigung beziehungsweise Quittierung zugelassen wird.

Auch ist vorteilhaft vorsehbar, dass im Zugriff auf und unter Ausnutzung topologischer Zusammenhänge und/oder von Plausibilitätsregeln das jeweilig zusammengefasste Modell der zweiten Modellebene automatisiert generiert wird, wobei bei unvollständigen und/oder fehlerbehafteten Angaben zur Vervollständigung und/oder Berichtigung der jeweiligen Informationen aufgefordert wird.

Die weitere Darlegung und Erläuterung der Erfindung erfolgt anhand einiger Figuren und Ausführungsbeispiele.

Vorteilhafte Ausgestaltungen und Weiterbildungen der Erfindung sind in den angeführten Figuren sowie den zugehörigen Ausführungsbeispielen angegeben.

Es zeigen:
Fig. 1 ein beispielhaft ausgebildetes System zur Ausführung des Verfahrens zur kombinierten Informationserfassung für SCADA-. und Simulations- oder Netzberechnungsanwendungen für ein Gasnetz,
Fig. 2 einen beispielhaften Teilbereich beziehungsweise eine beispielhafte Objektgruppe einer ersten Modellebene und das entsprechend zusammengefasste beziehungsweise vereinfachte Modell einer zweiten Modellebene.

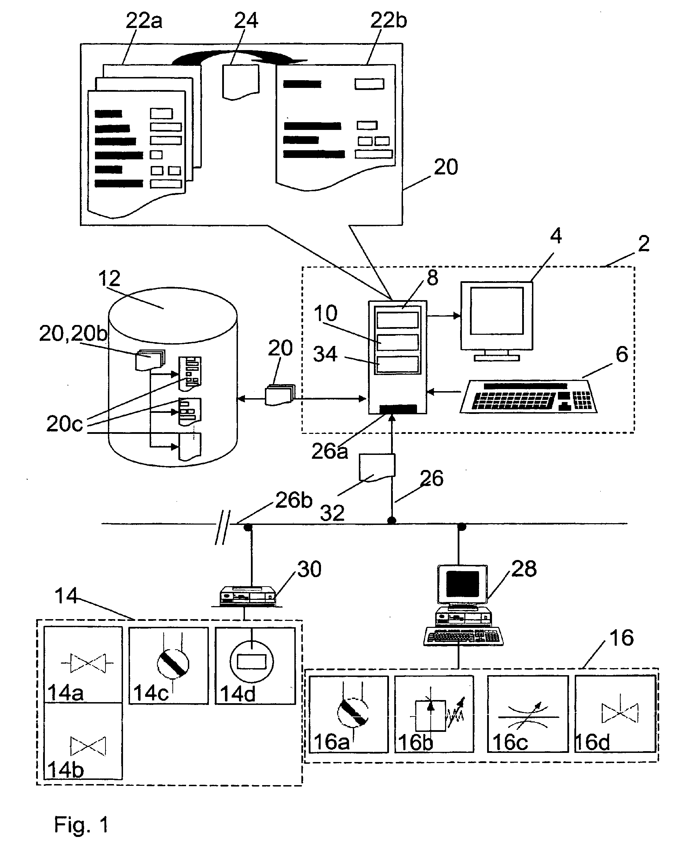

In der einzigen Figur 1 ist ein beispielhaft ausgebildetes System zur Ausführung des Verfahrens zur kombinierten Informationserfassung für SCADA-. und Simulations- oder Netzberechnungsanwendungen für ein Gasnetz, gezeigt, welches eine Datenverarbeitungseinrichtung 2 mit Anzeigeeinrichtung 4 sowie Eingabeeinrichtung 6, beispielhaft in Form eines Monitors sowie einer Tastatur, aufweist. Weiterhin sind Mittel zur Vorlagengenerierung 8 sowie zur Informationserfassung beziehungsweise - verarbeitung10 vorgesehen, mit weichen im Zusammenwirken mit einem Datenspeicher 12 wenigstens zwei Modellebenen eines Versorgungsnetzes, insbesondere eines Gas-, Wasser- oder Stromnetzes, vorlagen- und/oder musterbasiert generiert werden. Mittels Vorlagenerzeugung für sich wiederholende Teilbereiche und/oder Objektgruppen 14, 16 und/oder Objekte der wenigstens zwei Modellebenen, wobei es sich beispielsweise um Ventile 14a,b, 16d Stellungsanzeiger 14c, 16a, Messeinrichtung 14d, insbesondere Durchflusszähler, Drosselventil 16c, Druckregelventile 16b, Sensoren oder Messfühler und dergleichen mehr handeln kann, wird jeweils zumindest eine konsistente generische Vorlage 20 erstellt und/oder von einem Datenspeicher 12 aufgerufen, welche ein einheitliches, konsistentes Muster für ein Detailmodell 22a der ersten Modellebene, für ein vereinfachtes Modell 22b der zweiten Modellebene und/oder jeweilige Konvertierungsangaben 24 umfasst. Auch kann die jeweilige generische Vorlage 20 vervielfältigt, insbesondere dupliziert werden um den Eingabeaufwand beziehungsweise Erfassungsaufwand und damit auch mögliche Erfassungs- und/oder Eingabefehler zu reduzieren beziehungsweise minimieren. Die jeweilige generische Vorlage 20 kann durch Anpassung oder Abänderung bereits enthaltener Daten oder Informationen und/oder Ergänzung beziehungsweise Hinzufügung neuer oder weiterer Informationen personalisiert beziehungsweise individuell konditioniert und/oder angepasst werden, wobei konkrete Teilbereiche beider Modellebenen kombiniert ausbildbar sind.

Die Objekte und/oder Objektgruppen und/oder Teilbereiche der verschiedenen Modellebenen können dabei jeweils in Listenform und/oder graphisch in Form von Piktogrammen mit hinterlegten weiteren Objektinformationen und/oder -spezifika verdeutlicht werden.

Die für den Übergang zwischen den beiden Modellebenen beziehungsweise zur Bestimmung der logischen Objekte herangezogenen Konvertierungsangaben 24 können dabei Umrechnungsparameter und/oder Berechnungsregeln und/oder Konvertierungsanweisungen und/oder Verknüpfungsvorschriften und/oder Abhängigkeiten und/oder topologische Zusammenhänge und/oder Plausibilitätsregeln umfassen.

Des Weiteren können die generischen 20 und/oder angepassten Vorlagen und/oder zugehörigen Muster und/oder konkretisierten Teilbereiche auf einem dafür eingerichteten Datenspeicher 12, insbesondere in wenigstens einer entsprechend konfigurierten Datenbank zugreif- und abrufbar gespeichert werden oder sein.

Die jeweilige generische Vorlage 20 sowie deren wenigstens ein zugehöriges Muster 20b besitzt zumindest eine Eingabe-Maske 20c zur manuellen Erfassung und/oder Anpassung von Informationen beziehungsweise Daten.

Die jeweiligen Informationen sind dabei manuell erfassbar und/oder über wenigstens eine Kommunikationsverbindung 26, insbesondere eine Schnittstelle 26a mit angekoppeltem Bussystem 26b, beispielsweise der Art Feldbus, Profibus, Modbus, Ethernet, Bluetooth, WLAN, LAN, WAN, SCSI, PCI, USB oder RS-232 oder einer Kombination daraus, automatisiert online und/oder in Echtzeit erfassbar, beispielsweise im Zugriff auf ein entsprechendes Leitsystem, MES (Manufacturing Execution System), Prozessleitsystem oder Netzleitsystem 28 ist, welches beispielsweise mit über eine oder mehrere Speicherprogrammierbare Steuerungen 30 (SPS) verwaltete Objekten 14a,b,c,d oder Objektgruppen 14 oder unmittelbar verwaltete Objekte oder Objektgruppen 16 aufweisen kann. Auch spezifische Geräteinformationen beziehungsweise Betriebsmittelinformationen 32 im jeweiligen Versorgungsnetz, im hier gezeigten Beispiel ein Gasnetz, installierter beziehungsweise angeordneter Objekte, wie beispielsweise Aktoren oder Stellglieder, insbesondere Ventile, Drosselventile, Druckregler, Stellungsanzeiger und/oder Mess- und/oder Zähleinrichtungen, sowie Sensor- und Zustandsinformationen, sind demgemäß vorteilhaft erfassbar.

Das System weist weiterhin wenigstens ein Prüfmittel 34 auf, welches im Zugriff auf im Datenspeicher 12 gespeicherten Konvertierungsangaben 24 und insbesondere Plausibilitätsregeln eine Plausibilitätsprüfung und/oder Konsistenzprüfung der jeweiligen Vorlage und zugehörigen Muster und/oder der konkreten Teilbereiche bewirkt, wobei insbesondere Änderungen im Detailbereich daraufhin überprüft werden können, ob die jeweilige Änderung Auswirkungen auf die Gesamtmodellierung haben kann.

Fällt die Überprüfung positiv aus, so sind die erstellten Vorlagen und/oder deren Muster und/oder der jeweilig konkretisierte Teilbereiche konsistent und können auf einem Datenspeicher 12 abrufbar gespeichert werden. Damit sind die beiden erforderlichen Modellebenen 22a,22b konsistent gebildet und können für sich betrachtet der jeweiligen Anwendung und weiteren Verarbeitung zurunde gelegt werden.

Bei negativem Prüfungsverlauf hingegen wird mittels eines Hinweisgebers (in der Figur nicht explizit angegeben) auf mögliche Inkonsistenten und/oder Fehlerfassungen und/oder Fehlangaben hingewiesen, insbesondere durch Generieren einer entsprechenden Meldung, beispielsweise mittels Dialogabfrage, gegebenenfalls auch mit Quittierfunktion. und/oder durch temporäres Sperren der jeweiligen Vorlage und/oder der zugehörigen Auch können darüber hinaus Sperrfunktionalitäten vorgesehen sein, welche ein Verlassen und/oder Abspeichern der jeweiligen Vorlage und/oder Muster und/oder Maske zunächst verhindern und insbesondere erst nach ausdrücklicher Bestätigung beziehungsweise Quittierung die Weiterführung und/oder Beendigung des jeweiligen Verfahrens erlauben.

Im Zugriff auf und unter Ausnutzung topologischer Zusammenhänge und/oder von Plausibilitätsregeln ist des Weiteren auch eine automatische Generierung des zusammengefassten Modells der zweiten Modellebene durchführbar, wobei bei unvollständigen Angaben zur Vervollständigung.der Informationen aufgefordert wird.

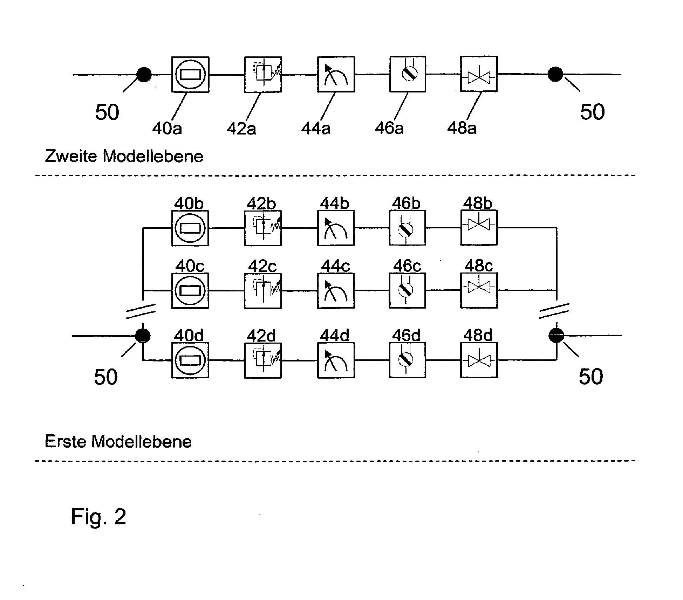

In Fig. 2 ist ein beispielhafter Teilbereich 36 einer ersten Modellebene, aufweisend zumindest drei zwischen zwei Verzweigungsstellen 50 angeordneten Leitungszweigen 38b,c,d eines Gasnetzes mit entsprechenden Objektgruppen b,c,d mit jeweils fünf einzelnen Objekten 40b, 42b,44b,46b, 48b sowie 40c,42c,44c,46c, 48c und 40d,42d,44d,46d,48d. Dabei handelt es sich bei den jeweiligen Objekten um Durchflussmesser 40b,c,d, um Druckregelventile 42b,c,d, um Temperaturmesser 44b,c,d, um Stellungsanzeiger 46b,c,d sowie um Ventile 48b,c,d.

Dieses Modell der ersten Modellebene mit Objekten 50, 40b,c,d-48b,c,d und Objektgruppen b,c,d der ersten Modellebene wird nun verfahrens- sowie systemgemäß in ein vereinfachtes, zusammengefasstes Modell der zweiten Modellebene konvertiert, indem anhand von Konvertierungsangaben der Teilbereich 36 inklusive der Objektgruppen b,c,d sowie der Objekte 40-48b,c,d der ersten Modellebene unter Verwendung der jeweiligen konsistenten generischen Vorlage 20, welche von einem Datenspeicher 12 aufrufbar ist, zu einem vereinfachten Modell der zweiten Modellebene 36a zusammengefasst. wird welches für den besagten Teilbereich noch lediglich 7 Objekte 50,40-48a, statt der ursprünglich zumindest 17 Objekte 40-48b,c,d aufweist.

Dabei umfasst auch das vereinfachte, zusammengefasste Modell für diesen Teilbereich 36a einen Durchflussmesser 40a, ein Druckregelventil 42a, ein Temperaturmesser 44a, ein Stellungsanzeiger 46a sowie ein Ventile 48a.

Dabei können beispielhaft die nachfolgenden Konvertierungsangaben 24 Umrechnungsparameter und/oder Berechnungsregeln und/oder Konvertierungsanweisungen und/oder Verknüpfungsvorschriften und/oder Abhängigkeiten und/oder topologische Zusammenhänge und/oder Plausibilitätsregeln verwendet werden.
a) So kann der durch den Durchflussmesser 40a der zweiten Modellebene angegebene Durchfluss aus der Summe der ermittelten Flüsse (Durchflussmengen) der Durchflussmesser 40b,c,d der verschiedenen Zweige der ersten Modellebene gebildet sein.und damit den gesamten Durchfluss zwischen den Verzweigungsstellen angeben.
b) Weiterhin könnte das Druckregelventil 42a der zweiten Modellebene den mittleren Druck der drei einzelnen Druckregelventile 42b,c,d angeben, wobei die Messdaten nur derjenigen Druckregelventile 42b,c,d zu berücksichtigen sind, bei welchen das entsprechende Ventil 48b,c,d ihrer Objektgruppe b,c,d auch geöffnet ist und damit ein Durchfluss überhaupt erst ermöglicht ist.
c) Auch erscheint die Temperatur im Hinblick auf eine mittlere Temperatur in der zweiten Modellebene nur angesichts derjenigen Temperaturmesser 44b,c,d der ersten Modellebene von Interesse und sinnvoll deren zugehörige Ventile 48b,c,d der jeweiligen Objektgruppe auch wirklich geöffnet sind und durch deren Zweige das jeweilige Medium auch fließen kann. Die bedeutet, das beispielsweise die Summe der gemessenen Temperaturen der einzelnen geöffneten Zweige dividiert durch die Anzahl der geöffneten Zweige beziehungsweise Temperaturmesser der ersten Modellebene die Temperatur des Temperaturmessers 44a der zweiten Modellebene ergibt.
d) Weiterhin sollte der Zustand des Ventils 48a der zweiten Modellebene bereits als "geöffnet" oder "offen" angeben wenn sich auch nur eines der Ventile 48b,c,d im Zustand offen beziehungsweise geöffnet befindet..
e) Der Stellungsanzeiger 46a der zweiten Modellebene hingegen kann die prozentuale Ventilstellung beziehungsweise Öffnung der Ventile der ersten Modellebene angeben.

Eine Plausibilitätsprüfung kann beispielsweise dahingehend erfolgen, dass überprüft wird ob die Anzahl der Elemente einer Summenbildung mit der Anzahl der jeweiligen Objekte einer Objektart übereinstimmen und/oder wirklich alle Objekte einer Objektart, beispielsweise eines Ventils oder Temperatur- oder Durchflussmessers, eines Teilbereichs der ersten Modellebene im entsprechenden Teilbereich der zweiten Modellebene, insbesondere in Anwendung der Konvertierungsangaben, berücksichtigt beziehungsweise aufgenommen sind.

Ebenso kann überprüft werden ob die jeweilige Objektgruppenstruktur oder Teilbereichsstruktur der ersten Modellebene in der zweiten Modelleben korrekt wiedergegeben ist.

Die vorgenannte Auflistung ist keinesfalls abschließend zu betrachten und soll die Offenbarung der vorliegenden Erfindung nicht beschränken. Sie dient vielmehr der Veranschaulichung. Grundsätzlich sind beliebige Konvertierungsangaben insbesondere auch in Abhängigkeit des jeweiligen Anwendungsbereiches frei vorgebbar.

Auch die verschiedenen einsetzbaren/aufrufbaren Vorlagen und Masken beziehungsweise die sie aufweisenden Objekte und Objektgruppen sind frei vorgebbar und/oder auch individuell mit jeweilig auch auf den Einzelfall beziehungsweise die jeweilige Anwendung, angepassten Konvertierungsvorschriften koppel- sowie verknüpfbar.

Es sei darauf hingewiesen, dass Verfahren und System grundsätzlich für alle Netze mit fließenden Medien, insbesondere Gas-, Wasser- und Fernwärmenetze, aber auch beispielsweise für Raffinerien, Ölpipelines, die Chemische/Pharmazeutische Industrie und ihre Rohstoff beziehungsweise Versorgungsnetze anwendbar sind.

## Patentansprüche

1. System zur kombinierten Informationserfassung für SCADA-. und Simulations- oder Netzberechnungsanwendungen mit zumindest einer Datenverarbeitungseinrichtung (2), weiche Mittel zur Vorlagengenerierung (8) sowie zur Informationserfassung (10) aufweist, mit welchen im Zusammenwirken mit wenigstens einem Datenspeicher (12) wenigstens zwei Modellebenen (22a4,22b) eines Versorgungsnetzes, insbesondere eines Gasnetzes, vorlagen- und musterbasiert generierbar sind, **dadurch gekennzeichnet, dass** mittels Vorlagenerzeugung (8) für sich wiederholende Teilbereiche oder Objektgruppen und Objekte der wenigstens zwei Modellebenen (22a,22b) jeweils zumindest eine konsistente generische Vorlage (20) erstellbar und aufrufbar ist, welche ein einheitliches, konsistentes Muster (20b) für ein Detailmodell wenigstens einer ersten Modellebene (22a), für ein vereinfachtes Modell (22b) wenigstens einer zweiten Modellebene und jeweilige Konvertierungsangaben (24), insbesondere für den Übergang zwischen je wenigstens zwei Modellebenen, umfasst, und die jeweilige generische Vorlage (20) vervielfältigbar, insbesondere duplizierbar ist, und wobei die jeweilige generische Vorlage (20) individuell anpassbar ist und konkrete Teilbereiche beider Modellebenen (22a, 22b) kombiniert ausbildbar sind.

2. System nach Anspruch 1, **dadurch gekennzeichnet, dass** die Konvertierungsangaben (24) Umrechnungsparameter und/oder Berechnungsregeln und/oder Konvertierungsanweisungen und/oder Verknüpfungsvorschriften und/oder Abhängigkeiten und/oder topologische Zusammenhänge und/oder Plausibilitätsregeln umfassen.

3. System nach einem der vorherigen Ansprüche, **dadurch gekennzeichnet, dass** die jeweilige generische Vorlage (20) sowie deren zugehöriges Muster (20b) wenigstens eine Maske (20c) zur manuellen Erfassung und/oder Anpassung von Informationen beziehungsweise Daten umfasst.

4. System nach einem der vorherigen Ansprüche, **dadurch gekennzeichnet, dass** jeweiligen Informationen manuell erfassbar und/oder über wenigstens eine Kommunikationsverbindung (26) automatisiert online erfassbar sind, insbesondere im Zugriff auf ein entsprechendes Leitsystem (28) und/oder Geräteinformationen (32).

5. System nach einem der vorherigen Ansprüche, **dadurch gekennzeichnet, dass** wenigstens ein Prüfmittel (34) vorgesehen ist, welches regelbasiert, insbesondere anhand von Plausibilitätsregeln im Zugriff auf Konvertierungsangaben (24), eine Plausibilitätsprüfung der jeweiligen Vorlage und zugehörigen Muster und/oder der konkreten Teilbereiche bewirkt.

6. System nach Anspruch 5, **dadurch gekennzeichnet, dass** bei Änderungen im Detailbereich überprüfbar ist, ob die jeweilige Änderung Auswirkungen auf die Gesamtmodellierung und/oder die Modellierung des zusammengefassten Modells der jeweils zweiten Modellebene haben kann.

7. System nach einem der vorherigen Ansprüche 5 oder 6, **dadurch gekennzeichnet, dass** wenigstens ein Hinweisgeber vorgesehen ist, welcher bei negativ verlaufender Plausibilitätsprüfung auf mögliche Inkonsistenten und/oder Fehlerfassungen und/oder Fehlangaben hinweist.

8. System nach Anspruch 7, **dadurch gekennzeichnet, dass** der Hinweisgeber bei negativem Verlauf eine Meldung generiert und/oder zur Anzeige bringt, insbesondere eine Meldung mit Dialogabfrage und/oder mit Quittierfunktion.

9. System nach einem der Ansprüche 7 oder 8, **dadurch gekennzeichnet, dass** der Hinweisgeber bei negativem Verlauf durch temporäre Sperrung der jeweiligen Vorlage und/oder der zugehörigen Muster ein Verlassen und/oder Abspeichern der jeweiligen Vorlage und/oder Muster verhindert und/oder erst nach ausdrücklicher Bestätigung und/oder Quittierung zulässt.

10. System nach einem der vorherigen Ansprüche, **dadurch gekennzeichnet, dass** im Zugriff auf und unter Ausnutzung topologischer Zusammenhänge und/oder von Plausibilitätsregeln eine automatische Generierung des zusammengefassten Modells der jeweils zweiten Modellebene bewirkt wird, wobei bei unvollständigen Angaben zur Vervollständigung der Informationen aufgefordert wird.

11. Verfahren zur kombinierten Informationserfassung für SCADA- und Simulations- oder Netzberechnungsanwendungen, insbesondere zur Ausführung auf einem System gemäß einem der Ansprüche 1 bis 10, **dadurch gekennzeichnet, dass** schrittweise wenigstens zwei Modellebenen (22a,22b) eines Versorgungsnetzes, insbesondere eines Gasnetzes, vorlagen- und musterbasiert generiert werden, indem für sich wiederholende Teilbereiche und/oder Objektgruppen (14,16) und Objekte (14a,b,c,d;16a,b,c,d) der wenigstens zwei Modellebenen (22a,22b) jeweils zumindest eine konsistente generische Vorlage (20) erstellt wird, welche ein einheitliches, konsistentes Muster (20b) für ein Detailmodell (22a) wenigstens einer ersten Modellebene, für ein vereinfachtes Modell (22b) wenigstens einer zweiten Modellebene und jeweilige Konvertierungsangaben (24), insbesondere für den Übergang zwischen je wenigstens zwei Modellebenen, umfasst, und die jeweilige generische Vorlage vervielfältigt wird und individuell angepasst wird und konkrete Teilbereiche beider Modellebenen kombiniert ausgebildet werden.

12. Verfahren nach Anspruch 11, **dadurch gekennzeichnet, dass** als Konvertierungsangaben (24) Umrechnungsparameter und-Berechnungsregeln oder Konvertierungsanweisungen oder Verknüpfungsvorschriften und Abhängigkeiten odertopologische Zusammenhänge oder Plausibifitätsregeln verwendet werden.

13. Verfahren nach einem der Ansprüche 11 oder 12, **dadurch gekennzeichnet, dass** durch die jeweilige generische Vorlage (20) sowie deren zugehöriges Muster (20b) wenigstens eine Maske (20c) zur manuellen Erfassung und/oder Anpassung von Informationen beziehungsweise Daten bereitgestellt wird.

14. Verfahren nach einem der Ansprüche 11 bis 13, **dadurch gekennzeichnet, dass** die jeweiligen Informationen manuell und/oder über wenigstens eine Kommunikationsverbindung (26) automatisiert und/oder online und/oder in Echtzeit erfasst werden, insbesondere im Zugriff auf ein entsprechendes Leitsystem (28) sowie auf Geräteinformationen (32).

15. Verfahren nach einem der Ansprüche 11 bis 14, **dadurch gekennzeichnet, dass** regelbasiert, insbesondere anhand von Plausibilitätsregeln im Zugriff auf Konvertierungsangaben (24), eine Plausibilitätsprüfung der jeweiligen Vorlage sowie der zugehörigen Muster und/oder der konkreten Teilbereiche durchgeführt wird, wobei insbesondere bei Änderungen im Detailbereich vorteilhaft überprüfbar ist, ob die jeweilige Änderung Auswirkungen auf die Gesamtmodellierung und/oder die Modellierung des zusammengefassten Modells der Jeweils zweiten Modellebene haben kann.

16. Verfahren nach Anspruch 15, **dadurch gekennzeichnet, dass** bei negativ verlaufender Plausibilitätsprüfung auf mögliche Inkonsistenten und/oder Fehlerfassungen und/oder Fehlangaben hingewiesen und/oder aufmerksam gemacht wird.

17. Verfahren nach einem der Ansprüche 15 oder 16, **dadurch gekennzeichnet, dass** bei negativem Verlauf eine entsprechenden Meldung generiert wird, welche insbesondere eine Dialogabfrage und/oder Quittierfunktion umfasst.

18. Verfahren nach einem der Ansprüche 15 bis 17, **dadurch gekennzeichnet, dass** bei negativem Verlauf die jeweilige Vorlage und/oder der zugehörigen Muster temporär gesperrt werden, so dass ein Verlassen und/oder Abspeichern der jeweiligen Vorlage und/oder Muster zunächst verhindert und/oder erst nach ausdrücklicher Bestätigung oder Quittierung zugelassen wird.

19. Verfahren nach einem der Ansprüche 11 bis 18, **dadurch gekennzeichnet, dass** im Zugriff auf und unter Ausnutzung topologischer Zusammenhänge und/oder von Plausibilitätsregeln das jeweilig zusammengefasste Modell der jeweils zweiten Modellebene automatisiert generiert wird, wobei bei unvollständigen und/oder fehlerbehafteten Angaben zur Vervollständigung und/oder Berichtigung der jeweiligen Informationen aufgefordert wird.

## Claims

1. System for the combined acquisition of information for SCADA and simulation or network calculation applications, having at least one data processing device (2) which has means for generating templates (8) and for acquiring information (10), which means can be used, in cooperation with at least one data memory (12), to generate at least two model levels (22a, 22b) of a supply network, in particular of a gas network, on the basis of templates and patterns, **characterized in that** at least one consistent generic template (20) respectively can be created and called up by means of template generation (8) for repeating subareas or object groups and objects of the at least two model levels (22a, 22b), said generic template comprising a uniform consistent pattern (20b) for a detailed model of at least one first model level (22a), for a simplified model (22b) of at least one second model level and respective conversion details (24), in particular for the transition between at least two respective model levels, and the respective generic template (20) being able to be copied, in particular duplicated, and the respective generic template (20) being able to be individually adapted, and specific subareas of the two model levels (22a, 22b) being able to be combined.

2. System according to Claim 1, **characterized in that** the conversion details (24) comprise conversion parameters and/or calculation rules and/or conversion instructions and/or combination rules and/or dependencies and/or topological relationships and/or plausibility rules.

3. System according to one of the preceding claims, **characterized in that** the respective generic template (20) and its associated pattern (20b) comprise at least one mask (20c) for manually acquiring and/or adapting information or data.

4. System according to one of the preceding claims, **characterized in that** respective information can be acquired manually and/or can be acquired in automated fashion online using at least one communication link (26), in particular when accessing a corresponding control system (28) and/or device information (32).

5. System according to one of the preceding claims, **characterized in that** provision is made of at least one checking means (34) which carries out a plausibility check on the respective template and associated patterns and/or on the specific subareas in a rule-based manner, in particular using plausibility rules, when accessing conversion details (24).

6. System according to Claim 5, **characterized in that**, in the event of changes in the detailed area, it is possible to check whether the respective change can affect the overall modeling and/or the modeling of the combined model of the respective second model level.

7. System according to either of the preceding Claims 5 and 6, **characterized in that** provision is made of at least one indication means which indicates possible inconsistencies and/or incorrect acquisition processes and/or incorrect details if the plausibility check is negative.

8. System according to Claim 7, **characterized in that** the indication means generates and/or displays a message, in particular a message with a dialog query and/or with an acknowledgement function, if the plausibility check is negative.

9. System according to either of Claims 7 and 8, **characterized in that**, if the plausibility check is negative, the indication means prevents the respective template and/or patterns being left and/or stored by temporarily blocking the respective template and/or the associated patterns and/or only allows this following express confirmation and/or acknowledgement.

10. System according to one of the preceding claims, **characterized in that** the combined model of the respective second model level is automatically generated when accessing and using topological relationships and/or plausibility rules, a request to complete the information being issued if the details are incomplete.

11. Method for the combined acquisition of information for SCADA and simulation or network calculation applications, in particular for execution in a system according to one of Claims 1 to 10, **characterized in that** at least two model levels (22a, 22b) of a supply network, in particular of a gas network, are gradually generated on the basis of templates and patterns by respectively creating at least one consistent generic template (20) for repeating subareas and/or object groups (14, 16) and objects (14a, b, c, d; 16a, b, c, d) of the at least two model levels (22a, 22b), said generic template comprising a uniform consistent pattern (20b) for a detailed model (22a) of at least one first model level, for a simplified model (22b) of at least one second model level and respective conversion details (24), in particular for the transition between at least two respective model levels, and the respective generic template being copied and individually adapted, and specific subareas of the two model levels being combined.

12. Method according to Claim 11, **characterized in that** conversion parameters and calculation rules or conversion instructions or combination rules and dependencies or topological relationships or plausibility rules are used as conversion details (24).

13. Method according to either of Claims 11 and 12, **characterized in that** the respective generic template (20) and its associated pattern (20b) provide at least one mask (20c) for manually acquiring and/or adapting information or data.

14. Method according to one of Claims 11 to 13, **characterized in that** the respective information is acquired manually and/or is acquired in automated fashion and/or online and/or in real time using at least one communication link (26), in particular when accessing a corresponding control system (28) and device information (32).

15. Method according to one of Claims 11 to 14, **characterized in that** a plausibility check is carried out on the respective template and the associated patterns and/or on the specific subareas in a rule-based manner, in particular using plausibility rules, when accessing conversion details (24), in which case, in particular in the event of changes in the detailed area, it is advantageously possible to check whether the respective change can affect the overall modeling and/or the modeling of the combined model of the respective second model level.

16. Method according to Claim 15, **characterized in that** possible inconsistencies and/or incorrect acquisition processes and/or incorrect details are indicated and/or attention is drawn thereto if the plausibility check is negative.

17. Method according to either of Claims 15 and 16, **characterized in that** a corresponding message which comprises, in particular, a dialog query and/or an acknowledgement function is generated if the plausibility check is negative.

18. Method according to one of Claims 15 to 17, **characterized in that**, if the plausibility check is negative, the respective template and/or the associated patterns is/are temporarily blocked, with the result that the respective template and/or patterns is/are prevented from being left or stored, and/or this is only allowed following express confirmation or acknowledgement.

19. Method according to one of Claims 11 to 18, **characterized in that** the respectively combined model of the respective second model level is generated in automated fashion when accessing and using topological relationships and/or plausibility rules, a request to complete and/or correct the respective information being issued if the details are incomplete and/or contain errors.

## Revendications

1. Système d'acquisition combinée d'informations pour des applications de SCADA et de calcul de simulation ou de réseau comprenant au moins un dispositif de traitement de données (2), lequel présente des moyens pour générer des modèles (8) ainsi que pour acquérir des informations (10), avec lesquels, en interaction avec au moins une mémoire de données (12), peuvent être générés au moins deux plans de modèle (22a, 22b) d'un réseau de distribution, notamment d'un réseau de gaz, en se basant sur un modèle et un prototype, **caractérisé en ce qu'**à l'aide de la génération de modèles (8) pour les zones partielles ou les groupes d'objets ainsi que les objets qui se répètent des au moins deux plans de modèle (22a, 22b), il est possible de créer et d'invoquer à chaque fois au moins un modèle générique cohérent (20), lequel inclut un prototype uniforme cohérent (20b) pour un modèle détaillé d'au moins un premier plan de modèle (22a), pour un modèle simplifié (22b) d'au moins un deuxième plan de modèle et à chaque fois des indications de conversion (24), notamment pour la transition entre à chaque fois au moins deux plans de modèle, et le modèle générique (20) correspondant peut être multiplié, notamment dupliqué, et le modèle générique (20) correspondant pouvant être adapté individuellement et les zones partielles concrètes des deux plans de modèle (22a, 22b) pouvant être configurées combinées.

2. Système selon la revendication 1, **caractérisé en ce que** les indications de conversion (24) comprennent des paramètres de conversion et/ou des règles de calcul et/ou des instructions de conversion et/ou des prescriptions de combinaison et/ou des dépendances et/ou des relations topologiques et/ou des règles de plausibilité.

3. Système selon l'une des revendications précédentes, **caractérisé en ce que** le modèle générique (20) correspondant ainsi que son prototype (20b) associé comprend au moins un masque (20c) pour la saisie et/ou l'adaptation manuelle d'informations ou de données.

4. Système selon l'une des revendications précédentes, **caractérisé en ce que** les informations respectives peuvent être saisies manuellement et/ou peuvent être saisies en ligne de manière automatisée par le biais d'au moins une liaison de communication (26), notamment en accédant à un système de conduite (28) correspondant et/ou à des informations d'appareil (32).

5. Système selon l'une des revendications précédentes, **caractérisé en ce qu'**il est prévu au moins un moyen de contrôle (34), lequel, en se basant sur des règles, notamment au moyen de règles de plausibilité en accédant à des indications de conversion (24), effectue un contrôle de plausibilité du modèle correspondant et du prototype associé et/ou des zones partielles concrètes.

6. Système selon la revendication 5, **caractérisé en ce qu'**en cas de modifications dans la zone détaillée, il est possible de contrôler si la modification correspondante peut avoir des répercussions sur la modélisation de l'ensemble et/ou la modélisation du modèle assemblé du deuxième plan de modèle correspondant.

7. Système selon l'une des revendications précédentes 5 ou 6, **caractérisé en ce qu'**il est prévu au moins un indicateur qui, si le contrôle de plausibilité produit un résultat négatif, signale des incohérences et/ou des erreurs de saisie et/ou des indications erronées possibles.

8. Système selon la revendication 7, **caractérisé en ce que** l'indicateur, en cas de résultat négatif, génère et/ou affiche un message, notamment un message accompagné d'une boîte de dialogue et/ou d'une fonction d'acquittement.

9. Système selon l'une des revendications 7 ou 8, **caractérisé en ce que** l'indicateur, en cas de résultat négatif, empêche par un blocage temporaire du modèle correspondant et/ou du prototype associé une sortie et/ou une mise en mémoire du modèle correspondant et/ou du prototype et/ou ne l'autorise qu'après une confirmation expresse et/ou un acquittement.

10. Système selon l'une des revendications précédentes, **caractérisé en ce qu'**une génération automatique du modèle assemblé du deuxième plan de modèle correspondant est effectuée en accédant aux relations topologiques et/ou aux règles de plausibilité et en les utilisant, une demande de complément d'information étant adressée en cas d'indications incomplètes.

11. Procédé d'acquisition combinée d'informations pour des applications de SCADA et de calcul de simulation ou de réseau, notamment pour la réalisation d'un système selon l'une des revendications 1 à 10, **caractérisé en ce qu'**au moins deux plans de modèle (22a, 22b) d'un réseau de distribution, notamment d'un réseau de gaz, sont générés pas à pas en se basant sur un modèle et un prototype, en créant à chaque fois au moins un modèle générique cohérent (20) pour les zones partielles et/ou les groupes d'objets (14, 16) ainsi que les objets (14a, b, c, d ; 16a, b, c, d) qui se répètent des au moins deux plans de modèle (22a, 22b), lequel inclut un prototype uniforme cohérent (20b) pour un modèle détaillé (22a) d'au moins un premier plan de modèle, pour un modèle simplifié (22b) d'au moins un deuxième plan de modèle et à chaque fois des indications de conversion (24), notamment pour la transition entre à chaque fois au moins deux plans de modèle, et le modèle générique correspondant est multiplié et adapté individuellement et les zones partielles concrètes des deux plans de modèle sont configurées combinées.

12. Procédé selon la revendication 11, **caractérisé en ce que** les indications de conversion (24) comprennent des paramètres de conversion et des règles de calcul ou des instructions de conversion ou des prescriptions de combinaison et des dépendances ou des relations topologiques ou des règles de plausibilité.

13. Procédé selon l'une des revendications 11 ou 12, **caractérisé en ce qu'**au moins un masque (20c) pour la saisie et/ou l'adaptation manuelle d'informations ou de données est mis à disposition par le modèle générique (20) correspondant ainsi que son prototype (20b) associé.

14. Procédé selon l'une des revendications 11 à 13, **caractérisé en ce que** les informations respectives sont saisies manuellement et/ou de manière automatisée par le biais d'au moins une liaison de communication (26) et/ou en ligne et/ou en temps réel, notamment en accédant à un système de conduite (28) correspondant ainsi qu'à des informations d'appareil (32).

15. Procédé selon l'une des revendications 11 à 14, **caractérisé en ce qu'**un contrôle de plausibilité du modèle correspondant et du prototype associé et/ou des zones partielles concrètes est effectué en se basant sur des règles, notamment au moyen de règles de plausibilité en accédant à des indications de conversion (24), ce qui rend avantageusement possible de contrôler, notamment en cas de modifications dans la zone détaillée, si la modification correspondante peut avoir des répercussions sur la modélisation de l'ensemble et/ou la modélisation du modèle assemblé du deuxième plan de modèle correspondant.

16. Procédé selon la revendication 15, **caractérisé en ce que** si le contrôle de plausibilité produit un résultat négatif, des incohérences et/ou des erreurs de saisie et/ou des indications erronées possibles sont signalées et/ou mises en valeur.

17. Procédé selon l'une des revendications 15 ou 16, **caractérisé en ce qu'**en cas de résultat négatif, un message correspondant est généré, lequel comprend notamment une boîte de dialogue et/ou une fonction d'acquittement.

18. Procédé selon l'une des revendications 15 à 17, **caractérisé en ce qu'**en cas de résultat négatif, le modèle correspondant et/ou le prototype associé est temporairement bloqué, de sorte qu'une sortie et/ou une mise en mémoire du modèle correspondant et/ou du prototype est tout d'abord empêchée et/ou n'est autorisée qu'après une confirmation expresse ou un acquittement.

19. Procédé selon l'une des revendications 11 à 18, **caractérisé en ce que** le modèle assemblé du deuxième plan de modèle correspondant est généré automatiquement en accédant aux relations topologiques et/ou aux règles de plausibilité et en les utilisant, un complément et/ou une correction des informations correspondantes étant demandé en cas d'indications incomplètes et/ou erronées.
